# EUROPEAN PATENT APPLICATION

(11) **EP 1 343 096 A2**
(43) Date of publication of application: **10.09.2003**
(21) Application number: 03251036.4
(22) Date of filing: 20.02.2003
(51) Int. Cl.: G06F 17/28

(54) **System and method for message language translation**

(30) Priority: 22.02.2002 GB 0204246
(71) Applicant: Mitel Knowledge Corporation, Kanata, Ontario K2K 2W7 (CA)
(72) Inventor: Kasvand, Tonis, Ottawa, Ontario K2E 6Z7 (CA); Horvath, Steve, Ottawa, Ontario K2J 3V6 (CA)
(74) Representative: Gold, Tibor Z.

(57) **Abstract**

A method of translating a message for an intended recipient. The method includes the steps of handling at least one call to receive a message in a first language, recognising the first language of the message, translating the message from the first language to a second message in a second language and handling the second message such that the second message is available to the intended recipient.

## Description

### Field of Invention

This invention relates generally to voice and text communication and in particular to a system and method for voice and text message language translation.

### Background of the Invention

With increasing globalisation of business and markets, there is an increasing need to interact and communicate with people around the world. This requires communication with many people having different native languages and can thus pose a problem when communication is necessary between people that do not speak the same language. The problem may be compounded when one person telephones a second person and leaves a message in a language that the second person does not understand. This is problematic because the person leaving the message may not realise that the second person does not speak or comprehend the language of the message.

Generally it is very time consuming for a person to learn to speak and comprehend another language. In many instances, this is not a practical solution because a person would be required to learn several different languages in order to translate a number of messages in different languages.

A translator is conventionally used for translating foreign language messages when communicating or reading voice mail. The use of a translator suffers from the disadvantages that this method can be inconvenient and costly. Also, a translator may only be able to translate between a limited number of languages, for example between two languages only, such as French and English. Since messages may be left in several different languages, several translators may be required. This further adds to the inconvenience and cost.

Translation equipment exists that can help, for example, electronic translation devices are available which allow a person to speak a phrase and have the device provide a spoken translation of the phrase. These electronic devices can be useful but may not be available when required. Further, when leaving a message or translating a message that has been left, the person leaving the message or retrieving the message must speak into the device to acquire the translation. Thus, use of these devices necessitates the pronunciation of words or phrases in a language in which a person is not fluent. Correct pronunciation may be very difficult resulting in inaccurate translations.

Accordingly, it is an object of an aspect of the present invention to provide a system and method for voice or text message translation that obviates or mitigates at least one of the disadvantages of the prior art.

### Summary of the Invention

According to an aspect of the present invention, there is provided a translation system for translating a message for an intended recipient. The translation system comprises: a call processor for handling at least one call to receive a first message in a first language; a language detector connected to the call processor for detecting the first language of the message; a language translator connected to the language detector for translating the message from the first language detected by the language detector to a second message in a second language, wherein the second message is made available for access by the intended recipient.

According to another aspect of the present invention, there is provided a method of translating a message for an intended recipient. The method comprises the steps of: handling at least one call to receive a message in a first language; recognising the first language of the message; translating the message from the first language to a second message in a second language; handling the second message such that the second message is available to the intended recipient.

Advantageously, aspects of the present invention provide a convenient system and method of translating voice or text messages into a preferred language. Thus aspects of the present invention aid in communication between users that speak different languages.

### Brief Description of the Drawings

The present invention will be described in detail with reference to the accompanying drawings, in which like numerals denote like parts, and in which:
Figure 1 is a block diagram of a translation system according to an embodiment of the present invention;
Figure 2 is a block diagram of the translation system of Figure 1 connected to a network for use;
Figure 3 is a flow chart of a method for selecting user translation options according to an embodiment of the present invention;
Figure 4 is a representation of an exemplary user translation option display according to an aspect of the embodiment of Figure 3;
Figure 5 is a flow chart of a method for message language translation according to an embodiment of the present invention;
Figure 6 is a representation of an exemplary user translated message display for a graphic user interface, in accordance with an aspect of an embodiment of Figure 4; and
Figure 7 is a flow chart of a method for message language translation according to a second embodiment of the present invention.

### Detailed Description

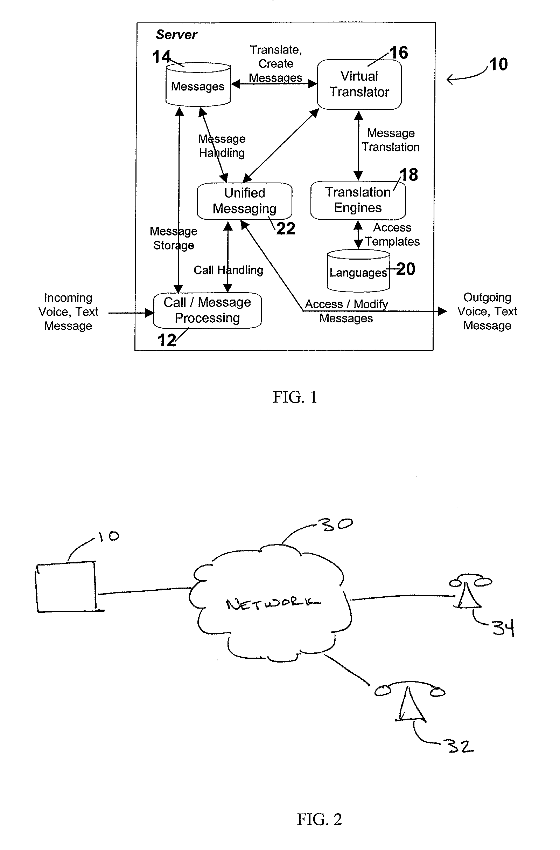

Referring to Figure 1, a message translation system according to an embodiment of the present invention is indicated generally by the numeral 10. The system includes a call / message processing system 12, a message database 14, a virtual translator 16, a translation engine 18, a language template storage 20, and a unified messaging system 22.

Referring to Figure 2, the message translation system 10 is connected to a network 30. The network 30 can be any suitable network such as a public switched telephone network (PSTN), a local area network (LAN), the Internet, or a combination thereof, for example. For exemplary purposes, the network 30 shown in Figure 2 is connected to two communication devices 32, 34. These communication devices 32, 34 can include, for example plain old telephone sets, wireless telephones, a PC telephone or LAN/IP phone. The system 10 is operable to receive messages from the communication device 32 and to provide messages to the communication device 34.

The virtual translator 16 is operable to provide a number of user translation options to the communication device 34, for selection of user-preferred translation options by the user of the communication device 34. The virtual translator 16 is further operable to store the user-preferred translation options in association with the user. The user translation options are provided to the communication device 34, for example, by basic voice or text display or by specialised graphic user interface (GUI) (where the communication device 34 is operable to support such a display or interface). For exemplary purposes, the communication device 34 of the present embodiment is operable to support a graphic user interface.

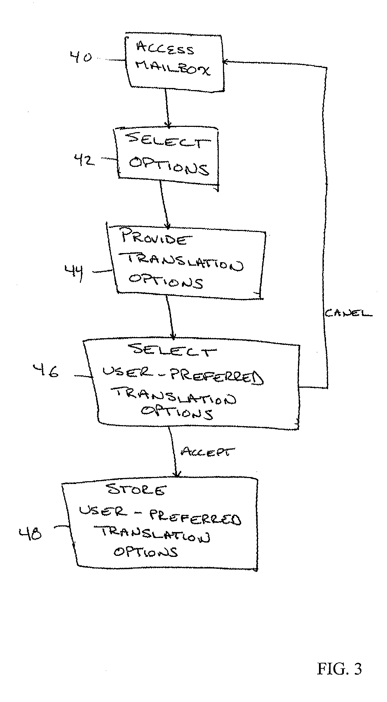

Referring to Figure 3, the user accesses their mailbox at step 40 by connecting to the system 10 via the network 30 using the communication device 32. The user selects user translation options on the communication device GUI for selecting user-preferred translation options at step 42. The virtual translator responds by providing a user translation options graphic display to the user at step 44.

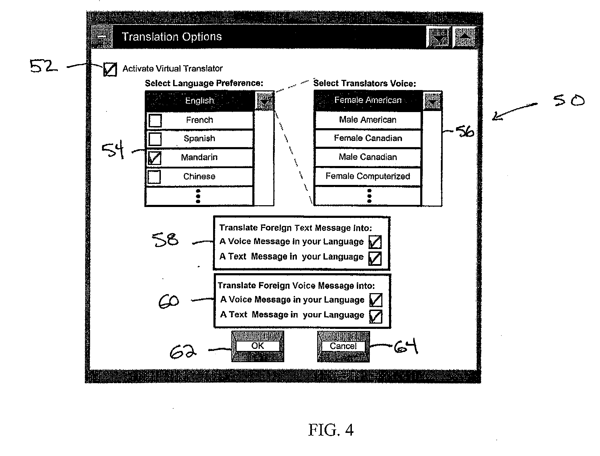

A representation of an exemplary user translation options graphic display is shown in Figure 4 and indicated generally by the numeral 50. The graphic display 50 includes many fields for input by the user. These fields include an Activate Translator field 52 for initiating translation of incoming messages, a Language Preference selection field 54 for selecting a preferred language for translation and a Translators Voice selection field 56 for selecting a preferred voice for translated voice message playback. The graphic display 50 further includes a Translate Text field 58 for selection of translation of text to one or both of voice and text and a Translate Voice field 60 for selection of translation of voice to one or both of voice and text. When the user has selected the user-preferred translation options, the user then selects the OK field 62 to accept the selections. A CANCEL field 64 is also provided for selection to exit the user translation options display 50 without saving the selected user-preferred translation options.

Referring Again to Figure 3, the user accepts the selections by selecting the OK field after selecting each of the preferred translation options and the translator then stores the user-preferred translation options in association with the user, at step 48.

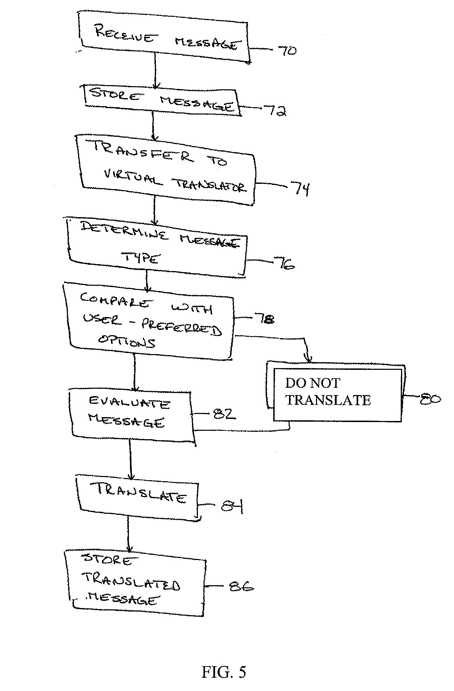

Reference is now made to Figure 5 which shows a flow chart of a method for message language translation according to the present embodiment. After connection of the communication device 32 to the system 10 through the network 30, the user of the communication device 32 leaves a message for the user of the communication device 34. The message is received by the call / message processor 12 as shown at step 70 and the call / message processor 12 stores the message in the message database 14 at step 72.

The message database 14 transfers the message to the virtual translator 16 at step 74. The virtual translator 16 determines the format of the message (whether the message is a voice or text message) and compares the message with the user-preferred translation options selected by the user at steps 76 and 78, respectively. If the user did not select the activate translator option in field 52, an attempt to translate the message is not made at step 80. If the user selected the activate translator option in field 52, the translation engine 18 evaluates the message using language detection (LD), determining the message language by analysing the language of the voice or text message at step 82. If the language of the message is the same compared to the user preferred language selected in the language preference field 54, then there is no translation at step 80. If the language cannot be identified by the translation engine 18, the message is not translated.

If the language of the message is different than the preferred language selected in the language preference field 54, then the message is translated according to the user-preferred translation options selected by the user. The virtual translator 16 determines which translations are selected in fields 58 and 60 and the translation engines 18 perform the required translation(s) at step 84. For example, if the message is a text message, the selections in field 58 are determined. If the message is a voice message, the selections in field 60 are determined. The translation engines 18 perform the translation accordingly. It will be appreciated that the translation engines are operable to perform speech-to-speech translation (S2ST) using speech based machine translation templates, speech-to-text translation (S2TT), text-to-speech translation (T2ST) and text-to-text translation (T2TT). LD, S2ST, S2TT, T2ST and T2TT are known to those of skill in the art.

The translated message(s) are then stored in the message database 14, with links between the original and translated messages, at step 86 and the call / message processor 12 is informed of the additions. The messages are made available to the communication device 34 through the unified messaging system 22.

The user then accesses their user-specific voice mail or text messaging by using the communication device 34 to connect to the system 10 via the network 30 in order to receive messages. The message translation system 10 is operable to provide a translated messages notification and to provide a list of options for selection by the user of the communication device 34 for viewing or listening to the message. The translated messages notification and options are provided to the communication device 34, for example, by basic voice or text display or by GUI (where the communication device 34 is operable to support such a display or interface). As stated above, for exemplary purposes, the communication device 34 of the present embodiment is operable to support a GUI.

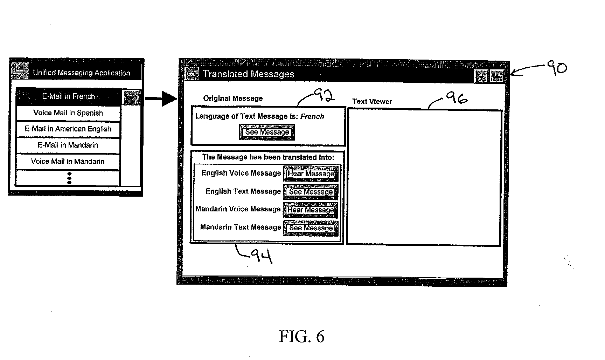

A representation of an exemplary translated messages graphic display is shown in Figure 6 and indicated generally by the numeral 90. The translated messages display includes fields for selection by the user. In the example of Figure 6, the message that was received by the call / message processor 12 in step 70 was a text message. The graphic display fields include a field 92 for selecting to view the original message, and a group of fields 94 for selecting to view or hear the translation(s) of the message. A display field 96 is provided for text display of the original message or translated message.

The message translation system 10 is operable to provide the voice or text message to the communication device 34 through the network 30. The user selects the desired text or voice message and the message translation system 10 provides the message to the communication device 34 in accordance with the message selected by the user. If the translation engines 18 could not identify the language of the message, the user receives a message that the translation engines 18 were not able to identify the language.

### EXAMPLE

The above disclosure describes a first embodiment of the present invention. A more complete understanding can be obtained by reference to the following Example. This Example shows functions carried out by the message translation system in the form of a "pseudo" computer code and is provided solely for purpose of illustration and is not intended to limit the scope of the invention. Changes in form and substitution of equivalents are contemplated as circumstances may suggest or render expedient. Although specific terms have been employed herein, such terms are intended in a descriptive sense and not for purposes of limitation.

### Pseudo Code

### When voice mail comes in

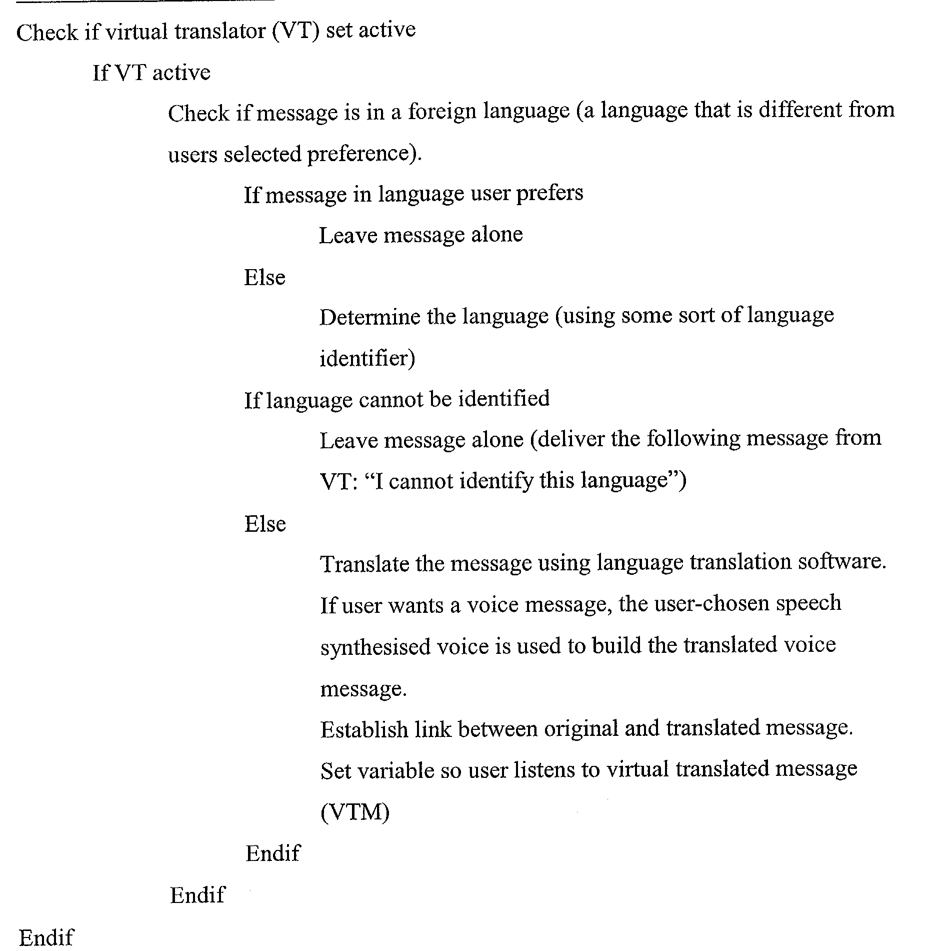

### When user listens to VM

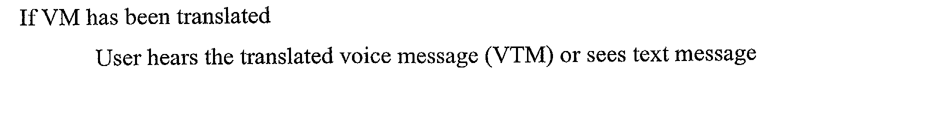

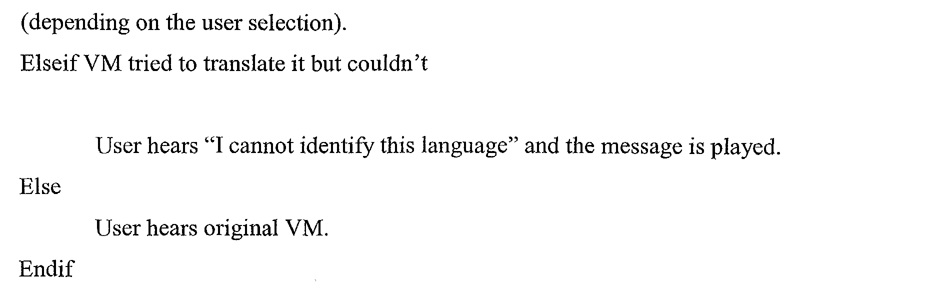

### When user selects User preferences

Receive voice mail in speech (played through communication device).
Receive voice mail in text (displayed on communication device).
Receive voice mail in speech and text.
Activate/Deactivate translation tool.
Language preference (i.e. Receive messages in English, French, etc.)
Listen/Display both original and translated VM.

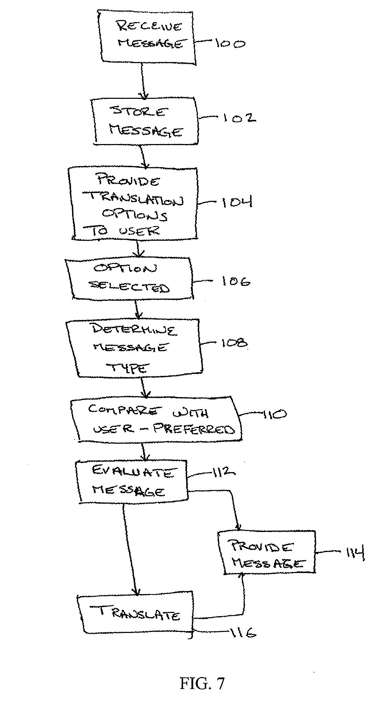

Referring now to Figure 7, the language translation need not be automatic. In a second embodiment of the present invention, the original message is received and stored in the message database 14 at steps 100 and 102, respectively. When the user accesses their voice mail or text messaging, the message translation system 10 provides a translate option to the communication device 34 at step 104. This option is provided by selecting a feature key, an access code, a soft key or a GUI button or menu item, for example. When this option is selected, the message translation system 10 provides a number of translation options for selection by the user of the communication device 34 for viewing or listening to a message. These options are similar to the options provided in the translated messages notification. These options are provided to the communication device 34, by basic voice or text display or by GUI (where the communication device 34 is operable to support such a display or interface). In the present example the options provided are the same as the options in fields 92 for selecting to view or hear the original message and 94 for selecting to view or hear the translation(s) of the message.

When the user selects one of the translation options at step 106, the virtual translator 16 determines whether the message is a voice or data type message at step 108. At step 110, the virtual translator 16 compares the message with the previously selected translation options from step 106. The translation engine 18 then evaluates the message at step 112 using language detection (LD), determining the message language by analysing the language of the voice or text message at step 82. If the language of the message is the same compared to the language selected by the user, then no translation is necessary and the message is provided to the communication device 34 at step 114.

If the language of the message is different than the language selected by the user, then the message is translated at step 116 according to the selected translation at step 106. As in the first-described embodiment, the translation engines 18 are operable to perform S2ST using speech based machine translation templates, S2TT, T2ST and T2TT. The translated message is then provided to the communication device 34 in the selected format (voice or text) at step 114.

Variations and modifications of the invention are possible. For example, the system might not include a unified messaging system. There may be fewer or more translation options, depending on the capabilities of the communication devices. Also, different options may be provided or may appear differently than the exemplary display provided. The translation options can be provided by simple voice or text. Rather than preselecting the user options as described for the second embodiment, the user can select desired options "on-the-fly". Again these options can be selected using a GUI or by simple voice or text. The system might only translate into one or translate between only two languages. Alternatively, the system might translate into and between multiple languages.

A messaging system might be limited in the type of messages, for example, may only provide voice mail messages. A system can also be "partitioned" into specific devices according their capabilities, for example, if using a wireless telephone with no text capability, S2ST will be used, but not S2TT, T2ST or T2TT.

The same invention can be used in reverse and the user that received the message can use the system to send back a message to the caller after converting the message back into the caller's language.

All such modifications and variations are within the sphere and scope of the present invention as defined by the appended claims.

## Claims

1. A translation system for translating a message, e.g. a voice message and/or a text message, for an intended recipient, comprising:
a call processor for handling at least one call to receive a first message in a first language;
a language detector and connected to said call processor for detecting the first language of the message;
a language translator connected to said language detector for translating said message from said first language detected by said language detector to a second message in a second language, said language translator being preferably operable to perform at least one of speech to speech translation, speech to text translation, text to speech translation and text to text translation;
wherein said second message is made available for access by the intended recipient; and wherein, optionally, said language detector and said language translator are unitary.

2. The translation system of claim 1 wherein said call processor is connected to a network, e.g. at least one of a public switched telephone network (PSTN), a local area network (LAN) and/or the Internet for receiving said first message.

3. The translation system according to claim 1 or 2 further comprising a message database connected to said call processor and said language translator for storage of said first and second messages, and optionally further comprising a unified messaging system connected to said call processor and said message database.

4. The translation system according to any preceding claim wherein the language detector is operable to provide user translation options to the intended recipient and/or is operable to store user-preferred translation options, and/or is operable to provide said user-translation options to the intended recipient by one of voice, text display and graphic user interface (GUI).

5. A method of translating a message for an intended recipient, comprising:
handling at least one call to receive a message in a first language;
recognising said first language of said message;
translating said message from said first language to a second message in a second language and wherein said step of translating may be automatically carried out when a message is received, or may be initiated by the recipient; and
handling the second message such that said second message is available to the intended recipient; and wherein said step of translating optionally includes at least one of speech to speech translation, speech to text translation, text to speech translation and text to text translation.

6. The method of translating a message according to claim 5 wherein said steps of recognising and translating are automatically carried out when a message is received; or wherein said steps of recognising and translating are initiated by the recipient.

7. The method of translating a message according to claim 5 or 6 further comprising the step of providing user translation options for the recipient prior to said step of translating, and/or further comprising the step of storing user-preferred translation options after said step of providing user translation options.

8. The method of translating a message according to claim 7 further comprising the step of comparing said message with said user-preferred translation options after said step of storing user-preferred translation options.

9. The method of translating a message according to any of claims 5 to 8 further comprising the step of comparing said first language of said first message with a preferred language of the recipient, and optionally also determining the message format prior to the step of recognising.

10. The method of translating a message according to claim 9 wherein said second language may be the same as said preferred language.
